# EUROPÄISCHE PATENTANMELDUNG

(11) **EP 2 617 931 A2**
(43) Veröffentlichungstag der Anmeldung: **24.07.2013**
(21) Anmeldenummer: 13151779.9
(22) Anmeldetag: 18.01.2013
(51) Int. Cl.: E06B 3/02, E06B 3/66

(54) **Tür- oder Fensteranordnung mit rahmenloser Tür- oder Fensterflügelanordnung mit Isolierverglasung**

(30) Priorität: 20.01.2012 DE 102012200797
(71) Anmelder: Woschko Beteiligungen GmbH, 74189 Weinsberg (DE)
(72) Erfinder: Woschko, Manfred, 74245 Löwenstein (DE); Woschko, Donat, 74182 Obersulm (DE)
(74) Vertreter: Beder, Jens

(57) **Zusammenfassung**

Bei einer Tür- oder Fensteranordnung mit einer rahmenlosen Tür- oder Fensterflügelanordnung (1) kann eine zur Aufnahme von Beschlagelementen geeignete Anordnung (10) zwischen den Glasscheiben eine Isolierverglasung dadurch eingebracht werden, dass nach Herstellen der Isolierverglasung mit Hilfe einer Metallform Kunststoffmasse eingespritzt wird, wobei nach Durchreagieren bzw. Aushärten der Kunststoffmasse dieser Anordnung (10) deren entsprechende Formgebung durch mechanische Bearbeitung erreicht wird, so dass die Aufnahme von Beschlägen bzw. Beschlagelementen erlaubt ist. Ein Blendrahmen kann in gleicher Weise gestaltet sein.

## Beschreibung

Die Erfindung betrifft eine Tür- oder Fensteranordnung mit einer rahmenlosen Tür- oder Fensterflügelanordnung mit Isolierverglasung gemäß dem Oberbegriff des Anspruches 1, wobei die Tür- oder Fensteranordnung in einem Blendrahmen eingesetzt ist bzw. einsetzbar ist, der in der gebäudeseitigen Tür- oder Fensteröffnung befestigt ist.

Herkömmliche Tür- oder Fensterflügelanordnungen bestehen im Wesentlichen aus einem Tür- bzw. Fensterrahmen, in dem eine Scheibenanordnung eingesetzt ist. Der Fensterrahmen trägt dann auch die Beschläge, mittels denen die Anordnung in einem herkömmlichen Blendrahmen (Türstock bzw. Fensterstock) einsetzbar und diesem gegenüber schwenkbar und verschließbar angeordnet ist. Insbesondere sind auch sogenannte Dreh- / Kippbeschläge bekannt, mittels denen die Fenster- oder die Türflügelanordnung gegenüber dem Blendrahmen verschwenkt oder gekippt werden kann, je nach Stellung eines Betätigungsgriffes, wobei in einer dritten Stellung des Betätigungsgriffes mittels des Beschlages eine feste Verriegelung im Blendrahmen erreicht wird, wobei Dichtheit nach außen durch Verwendung von umlaufenden Dichtungen erreicht ist. Herkömmlich werden ferner auch hierzu sogenannte Isolierverglasungen verwendet. Unter Isolierverglasung versteht man eine Scheibenanordnung aus mindestens zwei auf Abstand gehaltenen Glasscheiben, zwischen denen umlaufend ein sogenannter Abstandshalter gasdicht eingeklebt ist, wobei eine Randverfüllung, im Allgemeinen eine Thiokolmasse, eine weitere Abdichtung nach außen erzielt ist. Der Abstandshalter enthält meist ein feuchtigkeitsabsorbierendes Material, um Feuchte aus dem dicht abgeschlossenen Scheibenzwischenraum zwischen den beiden Scheiben und dem Abstandshalter zu absorbieren. Dieser Scheibenzwischenraum kann evakuiert sein, er kann jedoch auch mit bestimmten Gasmischungen gefüllt sein. Die Glasflächen können mit Wärmeschutz-, Schallschutz- und / oder Strahlungsschutz-Beschichtungen versehen sein.

Bei Türanordnungen, wie sie beispielsweise in Sportanlagen (Squash-Courts) bekannt sind schon Einscheibenverglasungen ohne Rahmen verwendet worden. Die für die Drehbewegung der Verglasung erforderlichen Beschläge sind angeklemmt oder über Bohrungen verschraubt. Falls randseitig Schienen aufgesetzt werden, sind auch Kipp-Beschlagsanordnungen möglich, allerdings wird wieder rahmenartiger Charakter verliehen.

Es besteht nun zumindest aus gestalterischen Wünschen der Wunsch auch rahmenlose Tür - und Fensterflügelanordnungen zu schaffen, die eine Isolierverglasung enthalten.

Die DE-AS-1212274 zeigt eine Anordnung, bei der die innenliegende Glasscheibe gegenüber der außenliegenden Glasscheibe einen umlaufenden randseitigen Überstand besitzt, wobei ein reiner Drehbeschlag vorgesehen ist, der entweder angekittet oder angeklemmt ist, und zwar im Wesentlichen an dem Überstand. Die Anordnung erlaubt nicht die Verwendung eines Dreh- / Kipp-Beschlages.

Die DE-U1-9304381 zeigt eine Anordnung mit einem Abstandshalter, der mit den beiden Glasscheiben verklebt ist und der in seinem nach außen weisendem Abschnitt eine umlaufende Nut trägt, die zur Aufnahme eines Beschlages, insbesondere des Dreh- / Kipp-Beschlages dient. Die DE-A1-4343521 zeigt eine grundsätzlich ähnliche Anordnung, bei der der Abstandhalter rückseitig derart verlängert ist, dass eine umlaufende U-förmige Vertiefung gebildet ist, die etwa bündig mit der außenliegenden Scheibe abschließt und die zur Aufnahme des Dreh- / Kipp-Beschlages dient. Auch hier ist der Abstandshalter zwischen den beiden Glasscheiben eingeklebt. Es hat sich nun gezeigt, dass derart gestaltete Flügelanordnungen den eingangs genannten Wunsch nicht zu befriedigen vermögen. Ein wesentlicher Faktor ist, dass der Scheibenzwischenraum der Isolierverglasung auch über längere Zeiträume nach außen gasdicht bleiben muss. Selbst wenn davon ausgegangen wird, dass lediglich die Verwendung einer Klebung des Abstandshalters ohne Randverfüllung zu einem über längere Zeiträume dichten Abschluss des Scheibenzwischenraums zu führen vermag, was nach bisherigen Erkenntnissen nur äußerst schwierig zu erreichen sein dürfte, sind die bei der bestimmungsgemäßen Betätigung der Beschläge ausgeübten Kräfte derart, dass bereits in kurzer Zeit die Dichte nicht mehr gegeben ist. Ferner sind die Belastungen und unter Umständen derart hoch, dass der Glasrand splittert, was ebenfalls unerwünscht ist. Ein weiterer Nachteil ist, dass das Klebemittel den Umwelteinflüssen, insbesondere der Sonnenstrahlung ausgesetzt ist, wodurch verstärkte Alterung auftritt, die wiederum zu Sprödigkeit und damit zu Dichtheit führt. Schließlich ist zu bemerken, dass die aus technischen Gründen die notwendigen Farbgebungen bei der Klebverbindung und bei dem Abstandshalter zu erheblichen ästhetischen Beeinträchtigungen führen. Außerdem lässt sich im Allgemeinen der durch die Glasscheibe hindurch sichtbare Rand der Klebeverbindung nicht sehr geradlinig gestalten, was ebenfalls aus ästhetischen Gründen unerwünscht ist.

In DE-A1 196 28 034, DE-A1 196 54 748 und DE-A1 197 01 386 sind rahmenlose Tür- oder Fensterflügelanordnung mit Isolierverglasung angegeben, die den praktischen Anforderungen im Wesentlichen genügen. Diesen Anmeldungen liegt die grundlegende Idee zu Grunde, ein nach außen offenes Profil für die Aufnahme des Beschlages vom Abstandshalter getrennt auszubilden und zwischen den gebäudeseitig innenliegend und außenliegend angeordneten Glasscheiben der Isolierverglasung zu befestigen, insbesondere einzukleben. Dabei wird von einer herkömmlichen Blendrahmenkonstruktion aus Aluminium, Kunststoff- oder Holzprofilen ausgegangen, die thermisch trennend ausgebildet sein können. Äquivalent dazu ist die Tür- oder Fensterflügelanordnung gleicherweise in Fassadenkonstruktionen einsetzbar, die eine Riegel- / Pfosten-Konstruktion aufweisen, wobei bei Einsatz der rahmenlosen Tür- oder Fensterflügelanordnung Riegel- und Pfosten blendrahmenähnliche Konstruktionen aufweisen müssen. Dies kann zu ästhetischen Einschränkungen dann führen, wenn die Fläche der Tür- oder Fensterflügelanordnung wesentlich kleiner ist, als die der zugehörigen Tür- oder Fensteröffnung, und somit die entsprechenden Blendrahmen relativ großflächig sind. Die DE-A1 197 33 154 schlägt hierzu vor, auch den Blendrahmen zumindest abschnittsweise, vorzugsweise umlaufend, ebenfalls durch eine gleichartig ausgebildete Isolierverglasung zu bilden, in die dann die rahmenlose Tür- oder Fensterflügelanordnung eingesetzt werden kann.

Die Erzeugung von die Beschläge aufnehmenden Bereichen mit Hilfe eines in den Fensterzwischenraum gespritzten Kunststoffs ist aus der DE 10 2010015 074 A1 bekannt

Nachteilig dabei ist allerdings, dass das Profil mit Hilfe einer komplexen Spritzform erzeugt werden muss und damit eine flexible Gestaltung der Außenkontur nicht möglich oder zumindest kostenintensiv ist.

Ausgehend hiervon ist es Aufgabe der Erfindung, eine technische einfachere und auch saubere Vorgehensweise zu verwenden, um für die Beschläge bzw. Beschlagelemente eine sichere Halterung zu erreichen.

Die Aufgabe wird durch die Merkmale der unabhängigen Ansprüche gelöst. Die gleiche Lösung ist auch bei einem durch eine Isolierverglasung gebildeten Blendrahmen anwendbar.

Die Erfindung wird durch die Merkmale der Unteransprüche weitergebildet.

Der Erfindung liegt der Grundgedanke zu Grunde vor Ort bei an sich fertiger Isolierverglasung die Anordnung direkt einzuspritzen, wobei nach Einspritzen der Kunststoffmasse und deren Durchreaktion, einer Aushärtung, ein räumlicher Verlauf der Anordnung erreicht werden kann, der es erlaubt, Beschläge und Beschlagelemente in an sich bekannter Weise aufzunehmen. Erfindungsgemäß wird dies dadurch erreicht, dass zunächst eine einfache Form gespritzt wird, die anschließen in einem mechanischen Bearbeitungsverfahren zur endgültigen Form weiterbearbeitet wird. Vorteilhaft können insbesondere Gewindehülsen oder andere die Befestigung der Beschläge ermöglichende mechanisch stabile, vorgefertigte Teile, z.B. als Einlegeteile, bereits eingebettet werden, die nach Durchreagieren ausreichend fest in der Kunststoffmasse sitzen, um die Beschlagelemente bzw. Beschläge in an sich bekannter Weise sehr einfach einsetzen zu können. Während des Einspritzens des Kunststoffs werden die Gewindehülsen bzw. die Einlegeteile mit Hilfe der Spritzform oder durch Klebung gehalten. Die Klebung wird vorzugsweise mit einem doppelseitigen Klebeband erreicht, das wärmedämmende Eigenschaften aufweist und das sich über die gesamte Breite von der inneren zur äußeren Scheibe erstreckt. Die Verwendung einer einspritzbaren Kunststoffmasse erlaubt es ferner in weitem Umfang die Farbwahl zu bestimmen. Gesonderte Klebevorgänge sind darüber hinaus nicht mehr erforderlich.

Die Erfindung wird anhand der in den Figuren erläuterten Ausführungsbeispiele näher erläutert.

In Fig. 1 ist die Anordnung in ihrem endgültig ausgebildeten Zustand mit Dichtungen und den Beschlägen dargestellt;
Fig. 2 zeigt die Herstellungsschritte einschließlich des Erstellens einer Rohform sowie der Herstellung der erforderlichen Aussparungen;
Fig. 3 zeigt ein Beispiel für die Verwendung von Einlegeteilen zur Versteifung;
Fig. 4 zeigt Einlegeteile mit einer Befestigungsmöglichkeit für die Beschläge;
Fig. 5 zeigt eine Alternative zur Befestigung der Beschläge in Einlegeteilen; und
Fig. 6 eine weitere Alternative zur sicheren Fixierung der Beschläge.

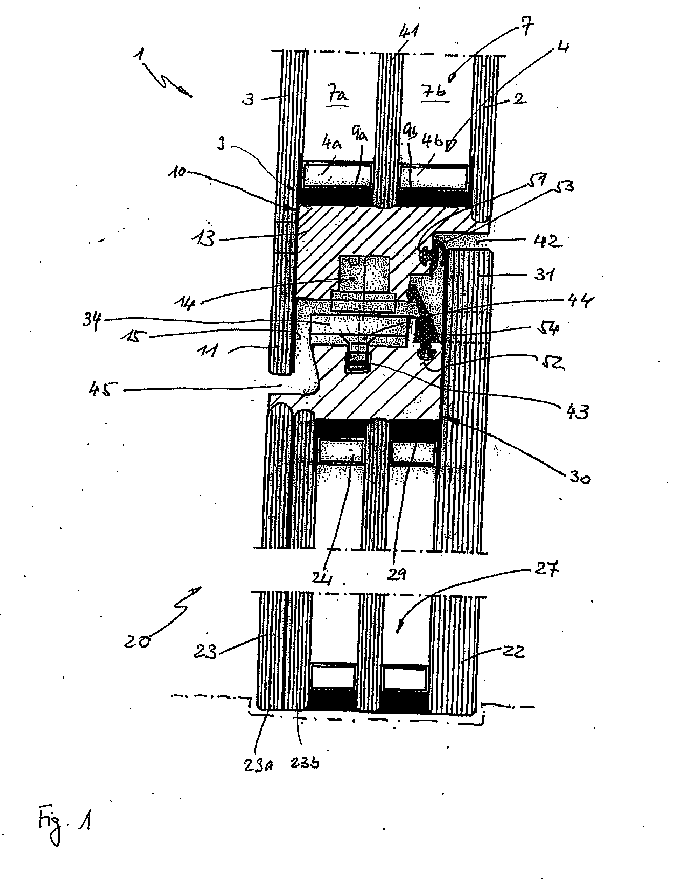

Die Figur 1 der Zeichnung zeigt eine Tür- oder Fensterflügelanordnung 1, die nach dem Prinzip einer Isolierverglasung aufgebaut ist. Sie weist demnach auf, im Bezug auf ein Gebäude, eine außenliegende Glasscheibe 2, eine innenliegende Glasscheibe 3 und einen Abstandshalter 4. Der Abstandshalter 4 ist von handelsüblicher Bauart und besteht aus einem Hohlprofil mit im Wesentlichen rechteckigen Querschnitt, in dessen Innenraum ein Feuchte absorbierendes Material aufgenommen sein kann, wobei dieser Innenraum über kleine Bohrungen mit dem Scheibenzwischenraum 7 in Verbindung steht. Beim Ausführungsbeispiel ist hier eine Mehrscheiben-Isolierverglasung gewählt, bei der zwischen der außenliegenden Glasscheibe 2 und der innenliegenden Glasscheibe 3 eine Zwischenscheibe 41 vorgesehen ist, wobei ein Abstandshalter 4a zwischen der Zwischenscheibe 41 und der innenliegenden Glasscheibe 3 und dem Abstandshalter 4b zwischen der Zwischenscheibe 41 und der Glasscheibe 2 vorgesehen sind, sodass auch entsprechende Scheibenzwischenräume 7a bzw. 7b gebildet sind.

Die Erfindung ist jedoch grundsätzlich auch auf eine übliche 2-Scheiben-Isolierverglasung (ohne Zwischenscheibe 41) anwendbar.

Wie bei Isolierverglasungen üblich, ist der Abstandshalter 4 (4a bzw. 4b) mittels eines Silikon- oder Butylhaftstreifens mit geringem Abstand von den Außenrändern der Glasscheiben 2, 3, bzw. der Zwischenscheibe 41 zwischen diese eingesetzt. Somit ist eine umlaufende Randfuge gebildet, die, wie bei Isolierverglasungen üblich, mit einer Randverfüllung 9 (9a bzw. 9b) versehen ist, die üblicherweise aus Thiokol besteht. Hierdurch wird der Scheibenzwischenraum 7 (7a bzw. 7b) gas- und feuchtigkeitsdicht nach außen abgeschlossen. Der Scheibenzwischenraum 7 (7a bzw. 7b) kann, wie an sich bekannt, mit einem Gas gefüllt oder (teil-)evakuiert sein.

Beim dargestellten Ausführungsbeispiel ist nun getrennt von der Randverfüllung 9a, 9b zwischen die Glasscheiben 2 und 3 eine von den Abstandshaltern 4a und 4b und auch der Zwischenscheibe 41 getrennte Anordnung 10 eingesetzt, die einen im Wesentlichen U-förmigen Querschnitt besitzt und nach außen offen ist, was zur Aufnahme eines Beschlages 14, insbesondere eines Dreh- / Kipp-Beschlages üblicher Bauart, dient. Ferner weist die innenliegende Glasscheibe 3 einen umlaufenden randseitigen Überstand 11 gegenüber der außenliegenden Glasscheibe 2 auf, wobei sich innenliegend und außenliegend auf die Lage der Tür- oder Fensterflügelanordnung 1 in einem in einem Gebäude eingebauten Zustand bezieht. Die Anordnung 10 definiert dabei im Querschnitt einen außenliegenden und einen innenliegenden Schenkel, die im Wesentlichen parallel zu den Glasscheiben 2 bzw. 3 verlaufen, wobei über deren bezüglich der Anordnung 10 außenliegende Flächen die feste Verbindung zu den Glasscheiben 2 und 3 und gegebenenfalls 41 während der Herstellung erreicht ist, wie das später erläutert wird. Der die Schenkel verbindende Querschenkel der Anordnung 10 kann von der Randverfüllmasse 9a, 9b beabstandet sein, derart, dass Luftraum gebildet ist, kann sich jedoch auch, wie im Beispiel dargestellt, direkt anschließen, wobei der im Querschnitt U-förmige Raum 13 zwischen den Schenkeln der Anordnung 10 zur Aufnahme des Beschlages 14 dient.

Die Querschnittsform der Anordnung 10 wird gemäß der Erfindung durch die Art und Weise erreicht, wie die Anordnung hergestellt wird. Hierzu wird, wie dies bei der Kunststoff-Spritztechnik an sich bekannt ist, eine Metallform vorgesehen, die die Negativform des zunächst zu spritzenden Querschnittes der Anordnung 10 einschließlich des U-förmigen Raumes 13 definiert. Diese Metallform wird mit der Isolierverglasung, insbesondere der vom Scheibenzwischenraum abgewandten Seite der Glasscheibe, soweit fest aber lösbar verbunden, dass die beim Einspritzen einer Kunststoffmasse auftretenden Kräfte aufgenommen werden können, ohne dass die feste Verbindung zwischen den Glasscheiben und Abstandshaltern gelöst und/oder die Metallform verschoben wird, und ebenfalls die Kräfte aufgenommen werden können, ohne die feste Verbindung zwischen den Glasscheiben und dem Abstandshalter zu lösen und / oder die Metallform zu verschieben, die beim Durchreagieren des Kunststoffes, d.h. bei dessen Aushärtung, auftreten können. Das Kunststoffmaterial ist ferner so auszuwählen, dass es weder bei Alterung zu einer Ablösung von den Glasscheiben kommt, noch bei bestimmungsgemäßem Gebrauch der Beschläge.

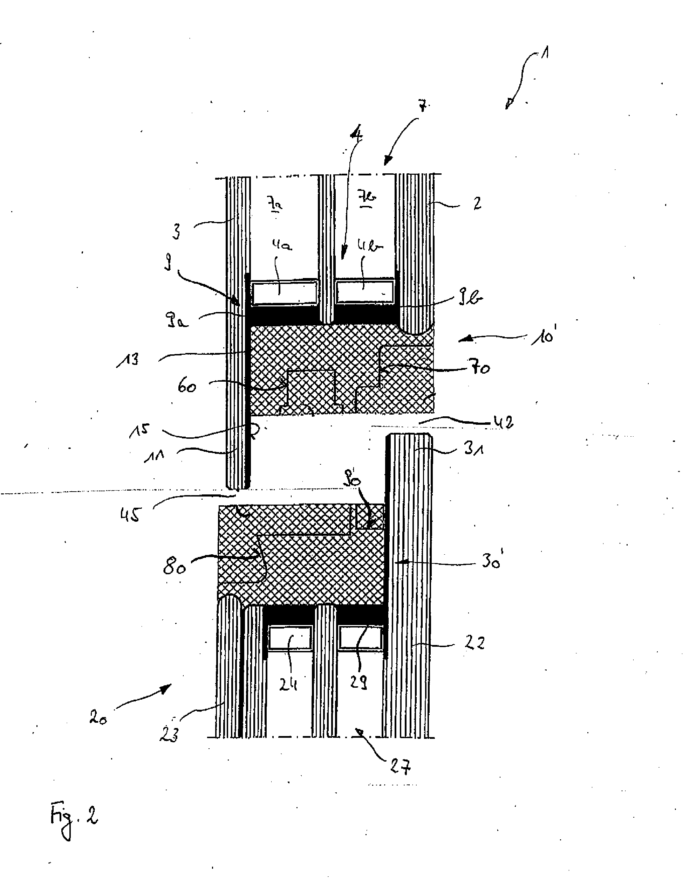

Diese Rohform wird anschließend mit Hilfe mechanischer Bearbeitung zur endgültigen Form weiterentwickelt. Dabei kann der ausgehärtete Kunststoff vorzugsweise durch Fräsen seine endgültige Kontur erhalten. Die Metallform kann damit sehr einfach ausgeführt werden, wie die nachfolgen unter Bezugnahme auf die Figur 2 noch erläutert wird.

Auf diese Weise wird gemäß der Erfindung eine Anordnung 10 geschaffen, die dauerhaft fest mit der Glasscheiben-Isolierverglasung verbunden ist, insbesondere mit den außen- und innenliegenden Glasscheiben 2 und 3 und gegebenenfalls auch 41 und deren Konsistenz durch das Ausreagieren derart ist, dass in den U-förmigen Raum 13 Beschlagelemente des Beschlages 14 in üblicher Weise aufgenommen werden könnten.

Darüber hinaus kann die innenliegende Glasscheibe 3 randseitig umlaufend eine zum Scheibenzwischenraum 7a weisende Emaillierung 15 aufweisen, deren Breite so bemessen ist, dass der Abstandshalter 4a und die Anordnung 10 sowie die Randverfügung 9a abgedeckt sind. Es hat sich nämlich gezeigt, dass eine derartige Abdeckung wie die Emaillierung 15 in ihrem Randverlauf sehr genau hergestellt werden kann, sodass ein ästhetisch sauberer Abschluss erzielt werden kann. Ferner kann durch diese Emaillierung das Glas in diesem Bereich unsichtbar gemacht werden oder eine farblich gewünschte Gestaltung erreicht werden. Durch geeignete Auswahl der Abdeckung wie der Emaillierung 15 kann darüber hinaus erreicht werden, dass beim Durchreagieren der eingespritzten Kunststoffmasse der Anordnung 10 eine außerordentlich feste Verbindung mit der jeweiligen Glasscheibe erzielt wird.

Eine entsprechende Abdeckung bzw. Emaillierung kann selbstverständlich auch an der außenliegenden Glasscheibe 2 vorgesehen sein.

Darüber hinaus kann, wie dargestellt, der der außenliegenden Glasscheibe 2 zugeordneten Teil der Anordnung 10 derart ausgebildet sein, dass der Rand der außenliegenden Glasscheibe 2 abgedeckt oder gar umhüllt wird, sodass eine mechanisch sichere gegebenenfalls haltende Verbindung zwischen der Anordnung 10 und der außenliegenden Glasscheibe 2 erreicht ist.

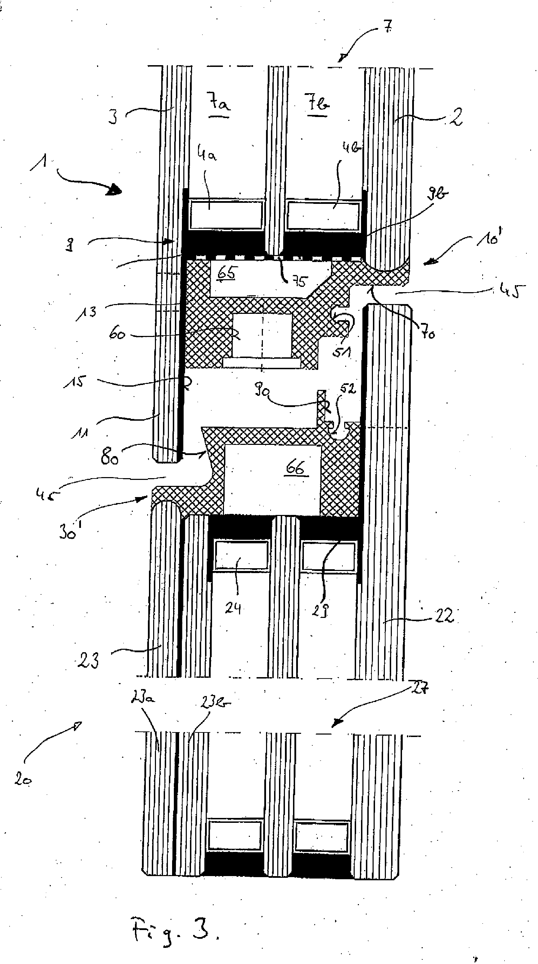

Wie an sich bekannt, kann mit Hilfe der Metallform auch in der Anordnung eine Versteifung aus einem Metall- oder Hartkunststoffstreifen vorgesehen werden, die umspritzt wird. Mögliche Formen sind in den Figuren 3 bis 6 dargstellt.

Herkömmlich kann eine derartige Tür- oder Fensterflügelanordnung 1 in einen Blendrahmen eingesetzt werden, der wiederum in einer Tür- oder Fensteröffnung befestigt ist.

Gemäß einer besonderen Weiterbildung ist der Blendrahmen selbst zumindest abschnittsweise, vorzugsweise vollständig umlaufend ebenfalls als eine Isolierverglasung 20 ausgebildet, die in eine nicht näher dargestellte Tür- oder Fensteröffnung in an sich bekannter Weise eingesetzt ist, sodass hier eine schematische Andeutung genügt. Die Isolierverglasung 20 weist eine außenliegende Glasscheibe 22, eine innenliegende Glasscheibe 23 und einen Abstandshalter 24 auf. Der Abstandshalter 24 ist ebenfalls von handelsüblicher Bauart, wie das bereits weiter oben erläutert wurde. Auch der Abstandshalter 24 ist mittels eines Silikon- oder Butylhaftstreifens mit geringerem Abstand von den Außenrändern der Glasscheiben 22 und 23 zwischen diese eingesetzt. Es ist ebenfalls eine umlaufende Randfuge gebildet, die wie bei Isolierverglasungen üblich mit einer Randverfüllung 29 versehen ist. Der Scheibenzwischenraum 27 kann ebenfalls wie an sich bekannt mit einem Gas gefüllt oder (Teil-)evakuiert sein. Bei der den Blendrahmen bildenden Isolierverglasung 20 weist die außenliegende Glasscheibe 22 einen umlaufenden randseitigen Überstand 31 auf, der so angeordnet ist, dass er bei geschlossenem Zustand einer eingesetzten Tür- oder Fensterflügelanordnung 1 mit deren außenliegenden Glasscheibe 2 mit möglichst geringem Spalt 42 fluchtet. Außenliegende Glasscheibe 22 und innenliegende Glasscheiben 23 tragen nun bei der dargestellten Ausführung ebenfalls eine Anordnung 30, die einen Abstand zur Randverfüllung 29 aufweisen kann, aber auch dicht an dieser anliegen kann, jedoch von dieser getrennt ist. Die Anordnung 30 ist vorzugsweise in gleicher Weise gefertigt wie die Anordnung 10 der Tür- bzw. Fensterflügelanordnung 1, nämlich durch eine Kunststoffmasse gebildet, die mit Hilfe einer Metallform eingespritzt und einer Durchreaktion sowie anschließender mechanischer Bearbeitung unterworfen ist. Die Anordnung 30 kann als einen Z-förmigen Querschnitt aufweisend bezeichnet werden mit einem mit dem Überstand 31 der außenliegenden Glasscheibe 22 fest verbundenen Schenkel und einem mit der innenliegenden Glasscheibe 23 fest verbundenen Schenkel sowie einem Verbindungsschenkel, der Träger von Beschlagelementen 34, mit denen der Beschlag 14 in der Flügelanordnung 1 in Eingriff kommen kann, sein kann. Im gegebenen Fall kann auch eine feste Verbindung mit einer Mittelscheibe erreicht sein. Außerdem können auch hier in gleicher Weise bei der Fertigung bereits Gewindehülsen 43 eingebracht sein, in denen mittels Schrauben 44 die entsprechenden Beschlagelemente befestigt werden können.

Der Überstand 31 der außenliegenden Glasscheibe 22 und die Anordnung 30 sind nur in dem Bereich der Isolierverglasung 20 des Blendrahmens erforderlich, in dem im geschlossenen Zustand der Tür- bzw. Fensterflügelanordnung 1 über deren Anordnung 10 gegenüber liegt. Der Überstand 11 der innenliegenden Glasscheibe 3 der Flügelanordnung 1 ist dabei so bemessen, dass sie auch den Bereich der Isolierverglasung 20 des Blendrahmens optisch abdeckt unter Bildung eines kleinen Spaltes 45. Auch hier kann eine umlaufende Abdeckung wie eine Emaillierung an den Glasscheiben vorgesehen sein, was hier im Einzelnen nur angedeutet ist.

Wie dargestellt können die beiden Anordnungen 10 und 30 bei deren Fertigung auch mit hinterschnittenen Nuten 51 bzw. 52 versehen werden, in die Dichtungen 53 bzw. 54 einsetzbar sind, deren Dichtlippen in geschlossenem Zustand der Gesamtanordnung in Anlage an das Gegenelement kommen können. Beim Ausführungsbeispiel ist die Dichtung 53 derart, dass sie in der Anordnung 10 aufgenommen ist, wobei deren Lippe gegen die außenliegende Glasscheibe 22 zur Anlage kommen kann, während die Dichtung 24 in der Anordnung 30 eingesetzt ist und deren Dichtlippe zur Anlage gegen die Anordnung 10 dient. Selbstverständlich sind auch andere Lagen und andere Anordnungen der Dichtungen und der diese aufnehmenden Nuten möglich. Zweckmäßig sind die Dichtungen 53, 54 nahe der außenliegenden Glasscheiben 2, 22, sodass eine wasserdurchlasshemmende Wirkung sicher erreicht ist.

Darüber hinaus können Blendrahmen und Flügelanordnung auch derart gestaltet sein, dass sowohl innenliegende als auch außenliegende Glasscheiben zueinander fluchten.

Darüber hinaus ist es möglich, wie bei der Isolierverglasung 20 des Blendrahmens dargestellt, eine oder mehrere der Glasscheiben als Mehrscheibenanordnung 23a, 23b vorzusehen, etwa um höhere Festigkeit zu erreichen, d.h. um größere mechanische Belastung aufnehmen zu können, aber auch zu Sicherheitszwecken, um einer gewollten Zerstörung entgegenwirken zu können. Wie bei der Flügelanordnung 1 ausgeführt, kann auch die Isolierverglasung 20 des Blendrahmens durch eine Mehrscheibenisolierverglasung gebildet sein, was nicht näher erläutert wird.

Es zeigt sich, dass durch die erfindungsgemäße Ausbildung Flügelanordnungen mit Abmessungen geschaffen werden können, die allen Ansprüchen genügen, wobei die Anordnungen, die zur Aufnahme von Beschlägen bzw. Beschlagelementen dienen, in einfacher und sicherer Weise vorgesehen werden können.

In der Fig. 2 ist das Herstellungsverfahren erkennbar. Gut zu erkennen ist es, dass zunächst der Kunststoff mit einem rechteckigen Querschnitt in dem Glasraum eingespritzt wird. Es entsteht eine Rohform 10', 30' für die spätere Anordnung 10 bzw. 30. Erst danach wird entsprechend der Konturen, die mit den Bezugszeichen 60, 70, 80 und 90 bezeichnet sind, die endgültige Form hergestellt. Hierzu kann die frei zugängliche Oberfläche des durchgehärteten Kunststoffs der Rohformen 10' und 30' mit beispielsweise einem Fräswerkzeug bearbeitet werden. Die Verwendung eines solchen Fräswerkzeugs zur Herstellung der Konturen 60, 70, 80 und 90 erlaubt es, insbesondere auch eine Vielzahl von Außenkonturen preisgünstig und effizient herzustellen. Es ist lediglich die Geometrie des Fräsers entsprechend zu wählen. Dagegen kann die Metallform zur Erzeugung der Rohform 10', 30' des Kunststoffs einfach ausgeführt werden, da immer von derselben, vorzugsweise rechteckigen Grundgeometrie des Querschnitts ausgegangen wird.

Die Fig. 3 zeigt zusätzlich verwendete Einlegeteile 65, 66, die vor dem Ausspritzen der Metallform in den zu umspritzenden Bereich eingelegt werden. Dabei können die Einlegeteile 65, 66 entweder mit Hilfe der Metallform an ihrem vorgesehenen Ort fixiert werden, oder aber auf bereits vorhandenen Bestandteilen wie beispielsweise dem Randverbund bzw. deren Randverfüllung provisorisch fixiert werden. Im Falle des Fensterflügels ist dies mit Hilfe eines doppleseitigen Klebebands 75 realisiert. Das Klebeband 75 besteht bevorzugt aus einem dünnen Metallband, das beidseitig mit Klebstoff beschichtet ist. Das hat den Vorteil, dass eine Diffusion von Weichmacher zwischen dem Randverbund und dem einzuspritzenden Kunststoff verhindert wird. Auch eine direkte Klebung ist denkbar. Das Klebeband 75 kann auch mit wärmedämmenden Eigenschaften ausgebildet sein, wodurch beim Durchhärten des Kunststoffs entstehende Wärme von dem Randverbund abgehalten wird. Das Klebeband 75 erstreckt sich, wie es auch in der Figur dargestellt ist, von der inneren Scheibe 3 bis zur äußeren Scheibe 2, so dass die gesamte Randverfüllung 9 abgedeckt ist.

In der Darstellung der Fig. 3 ist zudem die fertige mechanische Bearbeitung des durchgehärteten Kunststoffs zu erkennen. Zusätzlich zu der sich gemäß den Konturen 60, 70, 80 und 90 ergebenden Geometrie sind auch schon die Nuten 51, 52 eingebracht, um in der fertigen Anordnung 10, 30 die Dichtungen 53 und 54 aufnehmen zu können.

Die Einlegeteile 65 und 66 dienen hauptsächlich der Aussteifung, da als Einlegeteile 65, 66 Kunststoffe mit einer erhöhten Festigkeit gegenüber dem durchreagierten gespritzten Kunststoff verwendet werden können. Es ist ebenfalls denkbar, metallische Elemente zu verwenden, wobei Metalle den Nachteil der besseren Wärmeleitfähigkeit aufweisen. Durch die Verwendung von solchen Einlegeteilen 65, 66 kann die Biegesteifigkeit des durchreagierten Kunststoffmaterials beziehungsweise der gesamten Anordnung 10, 30 weiter erhöht werden. Insbesondere für schwere Fensterflügel, bei denen große Kräfte auftreten ist eine solche Aussteifung vorteilhaft.

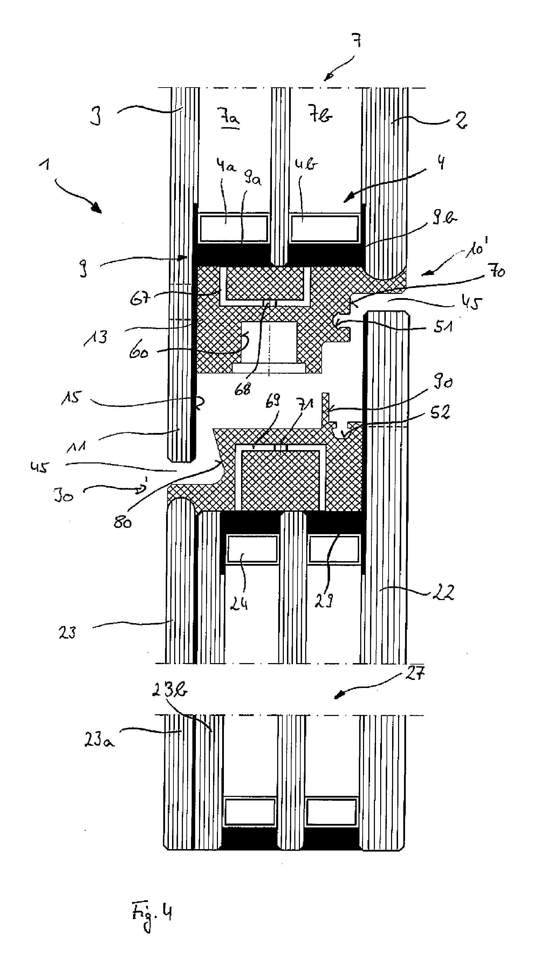

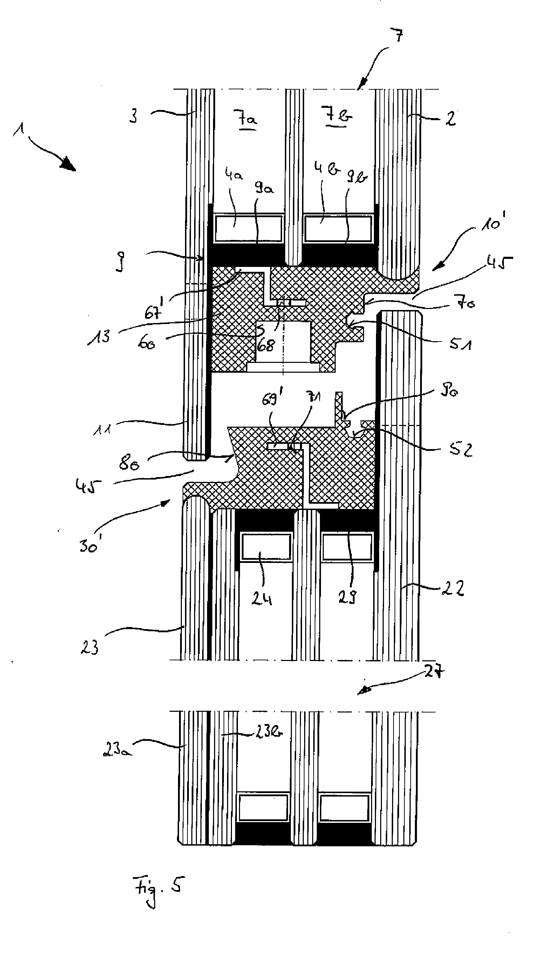

Die Fig. 4 zeigt eine Alternative Ausführungsform von Einlegeteilen. Die Einlegeteile 67 und 69 sind hier in Form eines im Wesentlichen U-förmigen Profils ausgebildet. Die geschlossene Seite des Us ist dabei auf den zu montierenden Beschlag hin gerichtet. In diesem Bereich ist eine Öffnung 68 beziehungsweise 71 angeordnet, die zur Aufnahme des Befestigungselements, beispielsweise einer Schraube des Beschlags dienen. Insbesondere können diese Befestigungslöcher auch so ausgebildet sein, dass sie ein Gewinde enthalten, in das eine Schraube eingreift. Um das vollständige Auszuspritzen zu erleichtern, ist eine alternative Ausführungsform in der Fig. 5 dargestellt. Die Profile 67' und 69' sind hier nicht U-förmig, sondern in Form eines Doppelwinkels ausgebildet. Dies erleichtert das Befüllen des hinter dem Profil in Richtung auf den Scheibenverbund zu gerichteten Bereich. Auch hier sind wieder Öffnungen 68, 71 zur Aufnahme von Befestigungselementen vorgesehen.

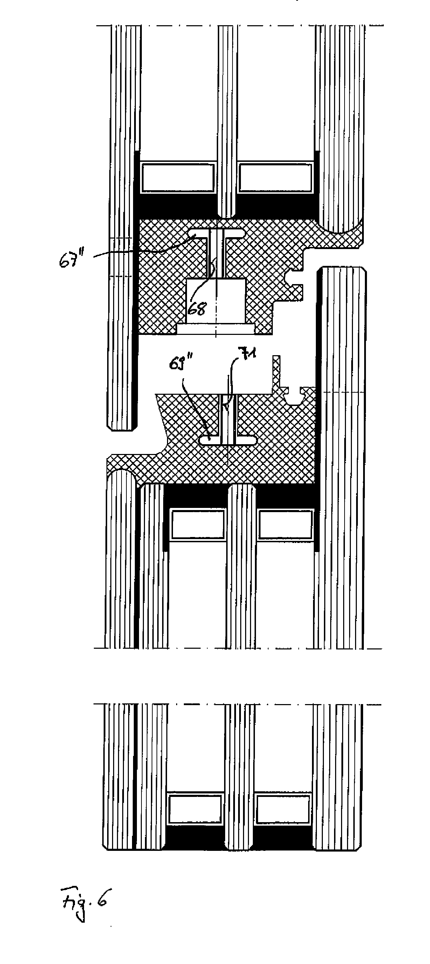

Eine weitere Alternative für Einlegeteile 67" und 69" ist in der Fig. 6 dargestellt. Die Einlegeteile 67"und 69" sind so ausgeführt, dass sie im Wesentlichen T-Förmig sind. Der erweiterte Kopfbereich ist dabei vorzugsweise so gestaltet, dass er eine Verdrehsicherung ermöglicht. Damit wird ein Mitdrehen zuverlässig verhindert. Die Öffnungen 68 und 71 sind in diesem Fall länger gestaltet als bei den Ausführungsformen der Figuren 4 und 5 und ermöglichen insbesondere die Ausbildung eines Gewindes, dessen tragende Länge deutlich vergrößert ist. Die Anordnung in dem Kunststoffmaterial ist bei dem Ausführungsbeispiel der Fig. 6 so gewählt, dass nach Herstellen der endgültigen Form, also nach dem Fräsen des durchgehärteten Kunststoffs, die Einlegeteile direkt zugänglich sind.

Werden die Einlegeteile beispielsweise als Kunststoffelemente vorgesehen, in die direkt die Befestigungsschrauben der Beschläge eingeschraubt werden, so können die Einlegeteile gemeinsam mit dem durchgehärteten Kunststoff gefräst werden. An der von außen sichtbaren Seite ergibt sich dann eine einheitliche Oberfläche, ohne jeglichen Versatz.

## Patentansprüche

1. Tür- oder Fensteranordnung mit einer rahmenlosen Tür- oder Fensterflügelanordnung mit Isolierverglasung, bestehend aus einer gebäudeseitig außenanliegenden Glasscheibe (2), einer gebäudeseitig innenliegenden Glasscheibe (3) mit einem gegenüber der außenliegenden Glasscheibe (2) umlaufendem randseitigem Überstand (11), einem Abstandshalter (4), der etwa randseitig zwischen innenliegender und außenliegender Glasscheibe (2, 3) gasdicht eingesetzt ist und einer ebenfalls randseitigen den Abstandshalter (4) von dieser getrennt umgebenden Anordnung (10) zwischen den Glasscheiben (2, 3) zur Aufnahme eines Beschlages (14), wobei Betätigungsglieder, die innen liegen, die Glasscheibe (3) über Öffnungen durchsetzen und den Zugang zum Beschlag (14) ermöglichen, wobei die Tür- oder Fensterflügelanordnung (1) in einem Blendrahmen eingesetzt ist, der in der gebäudeseitigen Tür- oder Fensteröffnung befestigt ist, wobei die Anordnung (10) durch einen mittels einer Metallform flüssig eingespritzten und durchreagierten Kunststoff gebildet ist, in dem nach Durchreaktion und Entfernung der Metallform der Beschlag (14) fest aufnehmbar ist,
**dadurch gekennzeichnet,**
**dass** die Form der Anordnung (19) nach erfolgter Durchreaktion durch mechanische Bearbeitung erzeugt ist.

2. Tür- oder Fensteranordnung nach Anspruch 1, **dadurch gekennzeichnet, dass** der Blendrahmen zumindest abschnittsweise durch eine weitere Isolierverglasung (20) gebildet ist, bestehend aus einer gebäudeseitig innenliegenden Glasscheibe (23), einer gebäudeseitig außenliegenden Glasscheibe (22) mit einem gegenüber der innenliegenden Glasscheibe (23) randseitigen Überstand (31) in dem Bereich, der der Flügelanordnung (1) zugewandt ist, einem Abstandshalter (24), der etwa randseitig zwischen innenliegender und außenliegender Glasscheibe (22, 23) gasdicht eingesetzt ist, und wobei in dem Bereich, der der Flügelanordnung (1) näher ist, als der Abstandshalter (24) eine weitere Anordnung (30) vorgesehen ist, die zur Aufnahme von Beschlagelementen (34), die mit dem Beschlag (14) der Flügelanordnung (1) zusammenwirken können, und von wenigstens einer Dichtun (54) dient, die mit der Flügelanordnung (1) zusammenwirken kann, wobei auch die weitere Anordnung (30) durch einen mittels einer Metallform flüssig eingespritzten und durchreagierten Kunststoff gebildet ist, in dem nach Durchreaktion und Entfernung der Metallform die Beschlagelemente (34) fest aufnehmbar sind, wobei auch die Form der weiteren Anordnung (30) nach erfolgter Durchreaktion durch mechanische Bearbeitung erzeugt ist.

3. Tür- und Fensteranordnung nach Anspruch 1 oder 2,
**dadurch gekennzeichnet,**
**dass** in dem Kunststoff Gewindehülsen und/oder andere Einlegeteile (65, 66, 67, 67', 69, 69') umspritzt sind, die nach dem Durchreagieren und dem Entfernen der Metallform im Kunststoff fest aufgenommen sind und zur Befestigung des Beschlages bzw. der Beschlagelemente und/oder zur Aussteifung der Anordnung 10, 30) dienen.

4. Tür- und Fensteranordnung nach Anspruch 3,
**dadurch gekennzeichnet,**
**dass** die Gewindehülsen und/oder die anderen Einlegeteile (65, 66, 67, 67', 67", 69, 69', 69") mittels der Metallform während des Spritzvorgangs gehalten werden.

5. Tür- und Fensteranordnung nach Anspruch 3 oder 4,
**dadurch gekennzeichnet,**
**dass** die anderen Einlegeteile (65, 66, 67, 67', 67", 69, 69', 69") an die Randverfüllung (9) geklebt werden, insbesondere durch ein doppelseitiges Klebeband (75), das sich über die gesamte Breite von der gebäudeseitig außenanliegenden Glasscheibe (2) zu der gebäudeseitig innenliegenden Glasscheibe (3) erstreckt.

6. Tür- oder Fensteranordnung nach einem der Ansprüche 1 bis 5,
**dadurch gekennzeichnet,**
**dass** in den Kunststoff mit Hilfe der Metallform hinterschnittene Nuten (51, 52) einformbar sind, in die nach dem Durchreagieren und dem Entfernen der Metallform Dichtungen (53, 54) einsetzbar sind.

7. Tür- oder Fensteranordnung nach einem der Ansprüche 1 bis 6, **dadurch gekennzeichnet,**
**dass** die Anordnung (10), gegebenenfalls die Anordnung (30), nahtlos umlaufend vorgesehen ist / sind.

8. Tür- oder Fensteranordnung nach einem der Ansprüche 2 bis 7,
**dadurch gekennzeichnet,**
**dass** die Isolierverglasung der Flügelanordnung (1) und gegebenenfalls die weitere Isolierverglasung (20) des Blendrahmens so bemessen sind, dass zumindest die jeweiligen außenliegenden Glasscheiben (22) etwa fluchten und die Isolierverglasung der Flügelanordnung (1) im geschlossenen Zustand der Flügelanordnung (1) gegen eine Dichtung (54) zur Anlage kommt, die von der Anordnung (30) der weiteren Isolierverglasung (20) des Blendrahmens getragen ist.

9. Tür- oder Fensteranordnung nach einem der Ansprüche 2 bis 8,
**dadurch gekennzeichnet,**
**dass** der Überstand (11) der innenliegenden Glasscheibe (3) der Isolierverglasung der Flügelanordnung (1) den Bereich der Isolierverglasung (20) des Blendrahmens im Wesentlichen überdeckt, der von deren Anordnung (30) und den von dieser getragenen Beschlagelementen (34) eingenommen ist.

10. Tür- oder Fensteranordnung nach einem der Ansprüche 1 bis 9,
**dadurch gekennzeichnet,**
**dass** die Isolierverglasung der Flügelanordnung und / oder die weitere Isolierverglasung (20) des Blendrahmens eine Mehrscheibenisolierverglasung ist /sind, wobei zwischen je zwei Glasscheiben (23, 51; 22, 51) je ein Abstandshalter (24a, 24b) vorgesehen ist.

11. Tür- oder Fensteranordnung nach einem der Ansprüche 8 bis 10,
**dadurch gekennzeichnet,**
**dass** beide Isolierverglasungen und deren Anordnungen so bemessen sind, dass die innenliegende Glasscheibe (3) der Isolierverglasung der Flügelanordnung (1) und die innenliegende Glasscheibe (23) der Isolierverglasung (20) des Blendrahmens fluchten.

12. Tür- oder Fensteranordnung nach einem der Ansprüche 1 bis 11,
**dadurch gekennzeichnet,**
**dass** zumindest eine von innenliegender und außenliegender Glasscheibe von Flügelanordnung und / oder Blendrahmen eine Mehrscheiben-Glasscheibenanordnung ist.

13. Tür- oder Fensteranordnung nach einem der Ansprüche 1 bis 12,
**dadurch gekennzeichnet,**
**dass** zumindest eine Glasscheibe (23) eine randseitige Abdeckung des Bereichs aufweist, der den Abstandshalter (24) und die jeweilige Anordnung (10, 30) umfasst, wobei die Abdeckung durch eine Glasbehandlung erreicht ist, die einen Haftgrund für das gasdichte Einsetzen des Abstandshalters (4, 24) und das Einspritzen des Kunststoffes der Anordnung (10, 30) gewährleistet, den entsprechenden Bereich jedoch im Wesentlichen undurchsichtig macht.

14. Tür- oder Fensteranordnung nach Anspruch 11, **gekennzeichnet durch** eine Emaillierung.

15. Tür- oder Fensteranordnung nach einem der Ansprüche 1 bis 14 insbesondere nach Anspruch 6,
**dadurch gekennzeichnet,**
**dass** die Anordnung (10) der Fensterflügelanordnung und / oder gegebenenfalls die Anordnung (30) des Blendrahmens (20) mindestens eine umlaufende Dichtung (53, 54) trägt, die im eingesetzten und geschlossenen Zustand zur abdichtenden Anlage an der jeweils anderen Anordnung (30, 10) oder einer zugeordneten Glasscheibe (2, 22) kommt.

16. Tür- oder Fensteranordnung nach Anspruch 15,
**dadurch gekennzeichnet,**
**dass** die Lage zumindest einer der Dichtungen derart ist, dass die abdichtende Anlage nahe der außenliegenden Glasscheibe (2, 22) ist, um wasserdurchlasshemmende Wirkung zu erreichen.

17. Tür- oder Fensteranordnung nach einem der Ansprüche 1 bis 16,
**dadurch gekennzeichnet,**
**dass** die Aufnahmetiefe in der Anordnung (10) und / oder der Überstand zwischen außenliegender und innenliegender Glasscheibe (2, 3) der Isolierverglasung der rahmenlosen Tür- oder Fensterflügelanordnung so bemessen ist, dass im eingesetzten Zustand zum Blendrahmen (20) vorspringende Teile des Beschlages (14) störungsfrei aufnehmbar sind, der bestimmungsgemäße Eingriff in blendrahmenseitige Beschlagselemente (34) jedoch gewährleistet ist.

18. Tür- oder Fensteranordnung nach einem der Ansprüche 1 bis 17,
**dadurch gekennzeichnet,**
**dass** zumindest eine der Anordnungen (10, 30) so ausgebildet ist, dass sie den Rand zumindest einer der zugeordneten Glasscheiben umgreift und damit diese abstützt.

19. Verfahren zum Vorsehen einer Anordnung (10) getrennt von einem Abstandshalter (4) einer Isolierverglasung zwischen den Glasscheiben (2, 3) der Isolierverglasung zur Aufnahme eines Beschlages (14) **gekennzeichnet durch** Vorsehen einer Metallform mit Abstand von dem Abstandshalter (4),
Einspritzen eines flüssigen Kunststoffes,
Durchreagieren lassen des eingespritzten Kunststoffes,
Entfernen der Metallform
Mechanisch Bearbeiten wenigstens einer Seite des durchreagierten Kunststoffs zur Erzeugung der endgültigen Form und
Einsetzen des Beschlages.

20. Verfahren nach Anspruch 18,
**dadurch gekennzeichnet,**
**dass** zunächst eine Form mit im Wesentlichen rechteckigen Querschnitt durch ddas Einspritzen des Kunststoffs in die Metallform erzeugt wird.

21. Verfahren nach Anspruch 19 oder 20,
**dadurch gekennzeichnet,**
**dass** die endgültige Form gefräst wird.

22. Verfahren nach einem der Ansprüche 19 bis 21,
**dadurch gekennzeichnet,**
**dass** vor dem Einsrpitzen des Kunststoffs Gewindehülsen und/oder andere Einlegeteile (65, 66, 67', 67, 69, 69') in dem Auszuspritzenden Bereich angeordnet werden, die nach Durchreagieren des Kunststoffes in diesem verbleiben und zur Aufnahme bzw. Befestigung des Beschlages dienen.

23. Verfahren nach Anspruch 22,
**dadurch gekennzeichnet,**
**dass** die Gewindehülsen Und/oder die anderen Einlegeteile (65, 66, 67, 67', 67", 69, 69', 69")mit Hilfe der Metallform während des Einspritzens des Kunststoffs gehalten werden.

24. Verfahren nach Anspruch 22 oder 24,
**dadurch gekennzeichnet,**
**dass** die anderen Einlegetele (65, 66, 67, 67', 67", 69, 69', 69")auf die Randverfüllung aufgeklebt werden, insbesondere mit Hilfe eines doppelseitigen Klebebands (75), welches sich über die gesamte Breite von der gebäudeseitig außenanliegenden Glasscheibe (2) zu der gebäudeseitig innenliegenden Glasscheibe (3) erstreckt

25. Verfahren nach einem der Ansprüche 19 bis 24,
**dadurch gekennzeichnet,**
**dass** die Metallform so ausgebildet ist, dass nach dem Durchreagieren in dem Kunststoff hinterschnittene Nuten verbleiben, in die Dichtungen einsetzbar sind.
